# EUROPEAN PATENT APPLICATION

(11) **EP 4 620 731 A1**
(43) Date of publication of application: **24.09.2025**
(21) Application number: 24165594.3
(22) Date of filing: 22.03.2024
(51) Int. Cl.: B60N 2/427, B60N 2/70, B60R 21/207

(54) **AN ANTI-SUBMARINING SYSTEM TO BE USED IN A VEHICLE SEAT AND THE USE OF SUCH SYSTEM**

(71) Applicant: Autoliv Development AB, 447 83 Vårgårda (SE)
(72) Inventor: Ljiljanic, Marko, 447 83 Vårgårda (SE); Riess, Alexander, 447 83 Vårgårda (SE); Kjell, Fredrik, 447 83 Vårgårda (SE); Gustafsson, Pontus, 447 83 Vårgårda (SE); Knutsson, Stefan, 447 83 Vårgårda (SE); Henriksson, Ola, 447 83 Vårgårda (SE); Svensson, Robert, 447 83 Vårgårda (SE); Svensson, Carl-Johan, 447 83 Vårgårda (SE); Hagg, Mikaela, 447 83 Vårgårda (SE); Berntsson, Mats, 447 83 Vårgårda (SE); Karlsson, Hanna, 447 83 Vårgårda (SE); Sandinge, Par, 447 83 Vårgårda (SE)
(74) Representative: AWA Sweden AB

(57) **Abstract**

An anti-submarining system (10) to be used in a vehicle seat (20) is provided comprising an inflatable airbag (13), at least one web (11), and a web tensioner (12) coupled to the at least one web (11). The at least one web is configured to be arranged to extend between two opposing structural seat components (21), the at least one web is further configured to be arranged inside the seat (20) in a position between a spring structure (23) and an exterior upholstery (24) of the vehicle seat. The airbag is provided separate from and above the web (11) such that the airbag and the web vertically overlap, and is configured to be arranged in a position between the web and the exterior upholstery. The airbag is connected to an inflator which is configured to inflate the airbag in response to an airbag activation signal.

## Description

### TECHNICAL FIELD

The invention refers to an anti-submarining system to be used in a vehicle seat and the use of such system in a vehicle seat.

### BACKGROUND

A vehicle seat in a modern passenger vehicle incorporates a multitude of features relating to either comfort or safety. Features relating to comfort may be the cushioning and the spring structure of the seat as well as features allowing the seat to be adjusted in position, for example the leaning back of the seat back.

Meanwhile, the most recognizable safety feature in a vehicle seat is the seat belt. The seat belt functions as a reaction surface, such as to restrain a passenger in the event of a collision. Hence, it is key that the seat belt engages with portions of the passenger's body which are able to absorb the usually very large forces in effect during a collision event. One such portion of the human body is the pelvic bone to which the lower strap of a three-point seat belt is arranged to engage.

The cushioning provided as comfort may influence where the seat belt ultimately engage with the passenger's body during a collision event. A phenomenon known as sinking-down or submarining may occur during the collision, where the cushioning of the vehicle seat allows the passenger's pelvic bone to be displaced vertically downwards and under the lower strap of the seat belt such that the lower strap instead engages with the abdomen of the passenger, a portion of the human body much less suitable for absorbing collision forces. Further to this, a seat back with a large inclination backwards will further promote submarining as the back lean of the seat back will cause an unfavourable rotation of the torso and pelvic bone relative to the collision forces. The trend towards autonomous or semi-autonomous vehicles is expected to cause more injuries of the latter type since especially the driver no longer need to have the same focus on the road and thereby can incline the seat into a more relaxing position.

The risks of submarining may be reduced considerably if the cushioning, spring structure and the ability to incline the seat back was removed. This would however reduce comfort which is often not an option for an everyday passenger vehicle. Ultimately, there exists a trade-off between safety and comfort where increased comfort in some circumstances reduces safety and vice versa. Hence, there is a need for new technology which allows comfort while reducing negative impacts on safety.

### SUMMARY

It is an object of the present invention to provide an anti-submarining system which reduces the risks for submarining associated with comfort features such as seat cushioning, spring structures and/or the leaning back of the seat back.

The anti-submarining system should be integrated to the inside of a vehicle seat.

The anti-submarining system should not impede comfort unless activated.

The anti-submarining should help the passenger to maintain or achieve a body position in which the risks of submarining are reduced.

These and other objects will be apparent from the following summary, description and appended claims.

According to an aspect of the present invention, there is provided an anti-submarining system to be used in a vehicle seat comprising:
an inflatable airbag, at least one web, and a web tensioner coupled to the at least one web, wherein at least one web is configured to be arranged to extend between two opposing structural seat components; wherein
the at least one web is configured to be arranged to extend between two opposing structural seat components;
the at least one web is configured to be arranged inside the seat in a position between a spring structure and an exterior upholstery of the vehicle seat;
the inflatable airbag is provided separate from and above the web such that the airbag and the web vertically overlap, and is configured to be arranged in a position between the web and the exterior upholstery;
the inflatable airbag is connected to an inflator which is configured to inflate the airbag in response to an airbag activation signal; and
the web tensioner is configured to set the at least one web from a slacked condition to a tensioned condition in response to a tensioner activation signal, whereby the thus tensioned web forms a reaction surface configured to support the inflated airbag from below in a direction upwardly towards a seated passenger.

Accordingly, an anti-submarining system is provided which may be integrated to the inside of a vehicle seat in a position between a spring structure and an exterior upholstery of the vehicle seat, i.e., the outermost layer of a seat. The anti-submarining system, i.e., the web and the airbag, may be positioned between the upholstery and the seat cushioning, in so limiting the amount of resilient material between the web, airbag and the body of a seated passenger.

The slacked condition of the at least one web prior to its activation allows the integration of the anti-submarining system to be performed without impairing on the overall seat comfort during the normal use of the seat. In other words, the web may be configured to extend in a non-linear fashion between two opposing structural seat components when in its slacked condition.

The airbag and the at least one web, although provided separate, should be considered as two cooperative elements of the anti-submarining system. This cooperative functioning between the two elements, will be detailed next.

The activation of the anti-submarining system result in a tensioning of the at least one web and a simultaneous or near simultaneous inflation of the airbag. Hence, the tensioner activation signal and the airbag activation signal may be issued simultaneously or, the one may be delayed with respect to the other. The skilled person realises that even though the activation signals should be issued simultaneously, the inherent operation of the tensioning mechanism of the web and the inflation of the airbag will have different reaction times, whereby it may take slightly longer time to reach a full inflation and hence deployment of the airbag than tensioning the web. This means that the tensioned web will substantially form an instant reaction surface for the airbag.

The inflation of the airbag causes an upward displacement of the femur of a seated person during a collision event. The inflated airbag will thereby act as an obstacle that contributes to the absorption of collision forces. Thereby any forward displacement of the pelvic of a seated passenger is limited.

Meanwhile, in a cooperative fashion, the at least one tensioned web will constitute a reaction surface inside the seat which thereby provides support for both the passenger and the airbag. Hence, the reaction surface formed by the at least one tensioned web has at least two main functions.

As for the first function of the reaction surface, the resilience in the seat provided by the cushioning and the spring structure is effectively reduced by the formation of the reaction surface. The resulting stiffening of the seat limits or reduces a passenger's body displacement downwardly into the seat during a collision event, thereby reducing the risk of an unfavourable body position relative to the seat belt i.e., submarining. The meaning of an unfavourable position in the context of the invention pertains to a positioning of the pelvic bone of the passenger where the reaction surface provided by the seat belt does not engage the area of the pelvic bones. The web extends linearly between the two opposing structural seat components when in its tensioned condition. Further to limiting a passenger's body displacement during a collision event, the provided anti-submarining system may promote a displacement of the passenger's body into a more favourable position. A favourable position, as opposed to an unfavourable position, is in the context of the invention one where the positioning of the pelvic bones of the passenger is such that the reaction surface provided by the seatbelt overlap the area of the pelvic bones.

As for the second function of the reaction surface, the reaction surface formed by the at least one tensioned web provides a support for the airbag from below, thereby limiting or reducing any downward displacement of the airbag. The support provided by the reaction surface of the at least one tensioned web to the airbag allows the airbag to be arranged to extend across central and rear portions of the seat pan which in most seats on the market typically lack structural support members. In other words, provided the support from the reaction surface, the airbag is allowed to extend across central and/or rear portions of a seat pan which commonly in prior art seats, due to comfort reasons, only comprise resilient members such as seat cushioning and spring structures. These are by themselves insufficient for providing adequate support for the function of the airbag as disclosed above.

Hence, the cooperative functioning of the at least one web and the airbag allow the airbag to be placed centrally in for example a seat pan. Thereby, the airbag may be arranged closer to the pelvis of a seated passenger than what would have been possible without the support from the reaction surface of the web. This improves the ability of the airbag to limit any forward displacement of the pelvis of a seated passenger.

In some embodiments, the at least one web and the airbag at least partially overlap one another such that they are in immediate contact while still provided separate. In other words, the at least one web and the airbag are not fastened to one another, as such a fastening could impose limitations in the inflation of the airbag. Hence, the airbag and the at least one web should be free to move relative to one another.

In some embodiments, the at least one web may be configured to be fixedly connected to each of the two opposing structural seat components.

In other embodiments the at least one web may be configured to be fixedly connected to one of the two opposing structural seat components and to partially and slidably encircle the second of the two opposing structural seat components. In embodiments where the at least one web is configured to partially and slidably encircle one of the two opposing structural seat components, the at least one web may be further configured to be fixedly connected to a suitable anchor point. The anchor point allows the web to achieve a tensioned state between its fixed connection to the first structural seat component and the anchor point while it partly and slidably encircles the second of the two opposing structural seat components. The skilled person realizes that the suitable anchor point may be any structural component of a vehicle or a vehicle seat.

In other embodiments, the least one web may be configured to partially and slidably encircle both of the two opposing structural seat components. The at least one web may further be configured to be fixedly connected to suitable anchor points. The anchor points allow the web to achieve a tensioned state between the two anchor points as it partly and slidably encircles the two opposing structural seat components. Again, the skilled person realizes that the suitable anchor points may be any structural component of a vehicle or a vehicle seat.

In some embodiments wherein the at least one web is configured to partially and slidably encircle both of the two opposing structural seat components, two opposing ends of the web may be configured to connect to one another as the web loops around the two structural seat components of the seat. In such embodiments, the two opposing ends of the web are connected to one another via the web tensioner.

In some embodiments, the two opposing structural seat components may be two opposing seat pan side structures of a seat pan of the vehicle seat, or two cross members extending between the two seat pan side structures. No matter if the two opposing structural seat components are two seat pan side structures, or two seat pan cross members, they may be appreciated to be substantially parallel with one another.

In some embodiments, the airbag may be configured to be attached, at one of its ends, to a front seat pan cross member and to extend towards the rear seat pan cross member. In such embodiments, the airbag is further configured to be positioned in an area of the seat pan such that the airbag is below and vertically overlaps the femurs of a seated passenger. The airbag may further be configured to be centred between the two opposing seat pan side structures.

In embodiments where the opposing structural seat components are two opposing seat pan cross members extending between two seat pan side structures, the at least one web may be configured to be fixedly connected to a front seat pan cross member, and to slidably and partially encircle a rear seat pan cross member. Alternatively, the at least one web may be configured to be fixedly connected to a rear seat pan cross member, and to slidably and partially encircle a front seat pan cross member. In such embodiments, the at least one web may be further configured to be fixedly connected to a suitable anchor point. The anchor point allows the web to achieve a tensioned state between its fixed connections to the front/rear seat pan cross member and the anchor point while it partly and slidably encircles the rear/front seat pan cross member. The skilled person realizes that the suitable anchor point may be any structural component of a vehicle or vehicle seat.

In other embodiments where the opposing structural seat components are two opposing seat pan cross members extending between two seat pan side structures, the at least one web may be configured to be fixedly connected to the front seat pan cross member via its first and second ends while the web slidably and partially encircles the rear seat pan cross member. Alternatively, the at least one web may be configured to be fixedly connected to the rear seat pan cross member via its first and second ends while the web slidably and partially encircles the front seat pan cross member. In such embodiments, at least one of the two ends of the web is connected to the seat pan cross member via the web tensioner. Hence the web tensioner may be configured to be fixedly connected to the front seat pan cross member or to the rear seat pan cross member.

In embodiments where the opposing structural seat components are two opposing seat pan cross members extending between two seat pan side structures, the at least one web may be configured to be arranged to be below and vertically overlap the femurs of a passenger seated in the seat. Thereby the at least one web will assume a position such that it may provide support for the airbag when in its tensioned state.

To even further ensure adequate support of the airbag, the at least one web may be formed by a single web with a width of at least 5 cm, preferably within a range of 10-50 cm. Alternatively, two or more webs may be provided having a combined width of at least 5 cm, preferably within a range of 10-50 cm.

In other embodiments where the two opposing seat structures are two opposing seat pan side structures, the at least one web may be configured to extend along a portion of the seat pan such that the reaction surface formed upon tensioning of the at least one web support the inflated airbag from below in a direction towards a seated passenger.

In a preferred embodiment, the at least one web is comprised of a non-stretchable pliable material. Preferably, a non-woven material is used. Also a woven material may be used.

The tensioning device may be configured to be fixedly connected to the front cross member or to the rear cross member.

The anti-submarining system may comprise at least two webs, and the at least two webs may be coupled to a common web tensioner. Alternatively, each of the at least two webs may be provided with its own web tensioner. No matter embodiment, the web tensioner may be a linear tensioner or a rotary tensioner.

According to a second aspect, the invention refers to a use of an anti-submarining system of the type described above in a vehicle seat. The vehicle seat may be arranged in a passenger vehicle, but it may also be a bus, a truck or a lorry. The features and functionality of the anti-submarining system have been thoroughly described above and are equally applicable when the anti-submarining system is used in a vehicle seat. Reference is made to the sections above to avoid undue repetition.

Further objects and advantages of the present invention will be obvious to a person skilled in the art reading the detailed description given below describing different embodiments.

### BRIEF DESCRIPTION OF DRAWINGS

The invention will be described in detail with reference to the schematic drawings.
Fig. 1A discloses highly schematically a vehicle seat provided with an anti-submarining system extending between two seat pan side structures.
Fig. 1B discloses highly schematically an example embodiment of the anti-submarining system when in a slacked condition.
Fig. 1C discloses highly schematically an example embodiment of the anti-submarining system when in a tensioned condition.
Fig. 2A discloses an example embodiment of the anti-submarining system.
Fig. 2B discloses an example embodiment of the anti-submarining system.
Fig. 2C discloses an example embodiment of the anti-submarining system.
Fig. 2D discloses an example embodiment of the anti-submarining system.
Fig. 3 discloses highly schematically a vehicle seat provided with an anti-submarining system extending between two seat pan cross-members.
Fig. 4A discloses an example embodiment of the anti-submarining system.
Fig. 4B discloses and example embodiment of the anti-submarining system.
Fig. 5 shows one example, highly schematically, where an anti-submarining system is arranged in the seat pan of the seat.
Fig. 6 discloses, highly schematically, one example of an unfavourable position.
Fig. 7 discloses highly schematically an alternative position of the airbag and web.

### DETAILED DESCRIPTION

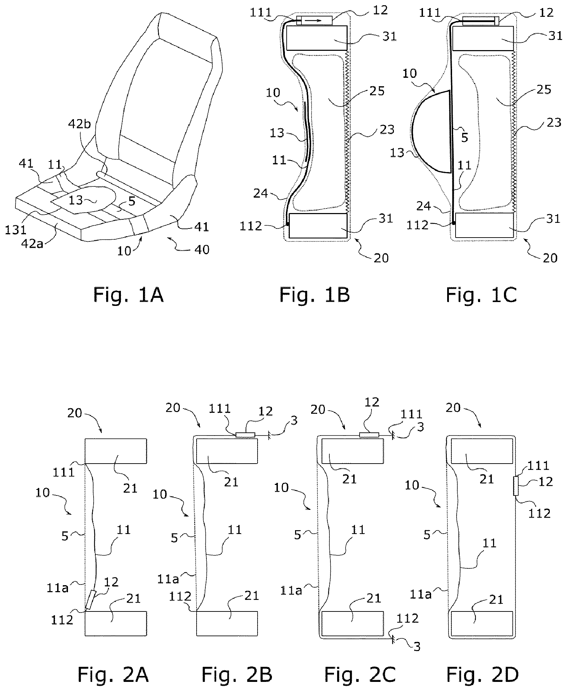

Beginning with Fig. 1A, a vehicle seat 20 is highly schematically illustrated. To improve understanding, the vehicle seat 20 is shown without common elements such as spring structure, cushioning or upholstery. The vehicle seat 20 has the overall same structural design as prior art vehicle seats. It comprises a frame like structure with two seat pan side structures 41 that are interconnected by two seat pan cross members 42a, 42b. The front seat pan cross member 42a comprises a support panel, typically made of thin sheet metal, that bridges the two opposing seat pan side structures 41 at a front end of the seat pan. The support panel serves inter alia as a connecting surface for various components that are part of the seat pan, including the non-disclosed spring structure and cushioning. The open portion of the frame like structure between a rear edge of the support panel and the rear seat pan cross member 42b is typically closed or covered by the non-disclosed spring structure, cushioning and upholstery.

The vehicle seat 20 differs from prior art vehicle seats in that it is provided with an anti-submarining system 10 according to the invention.

The anti-submarining system 10 comprises a web 11 that is configured to be arranged between two structural seat components, in the present example two seat pan side structures 41. In alternative embodiments, the two opposing structural seat components may be two seat pan cross members 42a, 42b extending between two seat pan side structures 41. In such embodiment, the skilled person realizes that the web 11 will be turned 90 degrees to that disclosed in Fig. 1A.

No matter if the two opposing structural seat components are two seat pan side structures 41 or two seat pan cross members 42a, 42b extending between two seat pan side structures 41, they may be appreciated to be substantially parallel with one another.

The anti-submarining system 10 further comprises an inflatable airbag 13. The inflatable airbag 13 is configured to be attached to the front seat pan cross member 42a and to extend towards the rear seat pan cross member 42b such that the airbag 13 and the web 11 vertically overlap. The inflatable airbag 13 is configured to be attached at one of its ends to the front seat pan cross member 42a. The skilled person realises that the same effect may be achieved by the inflatable airbag 13 instead being attached at one of its ends to the rear seat pan cross member 42b.

In some embodiments, the at least one web 11 and the airbag 13 may be separated vertically by a resilient material such as the cushioning of the seat. As shown in Fig. 1A, the at least one web 11 and the airbag 13 may instead be arranged to be in direct contact with one another. No matter if the at least one web 11 and the airbag 13 are in direct contact or vertically separated by a resilient material, the airbag 13 is provided separate from the web 11. This means that the at least one web 11 and the airbag 13 are not fastened to one another. A fastening would impose limitations in the inflation of the airbag 11 and tensioning of the web 11. Hence, the airbag 13 and the at least one web 11 are free to move relative to one another. The airbag 13 is further configured to be positioned in an area of the seat pan 40 such that the airbag 13 is below and vertically overlaps the femurs of a seated passenger (not shown).

In the present embodiment, the airbag 13 has an extension such that a majority of the airbag is unsupported from below by the support panel that is typically part of the front seat pan cross member42a. Hence, the airbag 13 is horizontally displaced in view of the support panel in a direction towards the rear seat pan cross member 42b. The thus unsupported airbag portion will instead be supported by the rection surface 5 that is formed by tensioning the at least one web 11 which is arranged below and in a vertically overlapping relation to the airbag 13.

Now turning to Fig. 1B which discloses the anti-submarining system 10 when in its ordinary use condition, i.e., when the web 11 extends between the two opposing structural seat components 21 in a slacked condition, and when the airbag 13 is deflated. The web 11 extends in a non-linear fashion between two opposing structural seat components 21 when in its slacked condition. The slacked condition of the web 11 prior to its activation and hence before being tensioned allows the integration of the anti-submarining system 10 into the seat 20 without impairing on the comfort of the seat 20.

The web 11 may be comprised of a non-stretchable pliable material. Preferably, a non-woven material is used. Also a woven material may be used.

The web 11 may be a single continuous sheet. Alternatively, the anti-submarining system 10 may comprise more than one web 11 (not shown). In the event of more than one web 11, the webs may optionally be interconnected via cross connections.

The web 11 is configured to be arranged inside the seat 20 in a position between a spring structure 23 and an exterior upholstery 24 of the vehicle seat 20.

Fig. 1B discloses an example where the web 11 is positioned between the upholstery 24 and a seat cushioning 25. Thereby, it limits the amount of resilient material between the web 11 and the body of a seated passenger (not shown). However, the web 11 may be configured to be placed elsewhere in relation to said cushioning as long as said position is between the spring structure 23 and the exterior upholstery 24 of the vehicle seat 20.

The airbag 13 is positioned above the web 11 and below the upholstery 24 of the seat 20 such that there is a vertical overlap between the airbag 13 and the web 11. The overlap may be a full overlap or a partial overlap. It is preferred that the overlapping area is at least 50 % and more preferred more than 75% of the total lower surface area of the inflated airbag.

The anti-submarining system 10 further comprises a web tensioner 12 that is coupled to one of the ends 111 of the web 11. In the present embodiment, the web tensioner 12 is a linear tensioner. In other embodiments the tensioner may be a rotary tensioner. These two types of tensioners 12 are as such well known to the skilled person and are not further described. At least the linear tensioner 12 may be a pyrotechnically activated tensioner.

The airbag 13 is connected to an inflator (not shown) which is configured to inflate the airbag 13 in response to an airbag activation signal. This is as such well known to the skilled person and not further described.

The web tensioner 12 is configured to set the at least one web 11 from a slacked condition, as shown in Fig. 1B, to a tensioned condition, as shown in Fig. 1C, in response to a tensioner activation signal. The thus tensioned web 11, which is positioned below and vertically overlap the airbag 13, forms a reaction surface 5 configured to support the inflated airbag 13 upwardly towards a seated passenger.

The respective activation signals may be signals generated upon a detection of an emergency situation, such as a crash situation. This kind of detection and signal processing is as such well known to the skilled person and is not further discussed.

The tensioner activation signal and the airbag activation signal may be issued simultaneously or, the one may be delayed with respect to the other. The skilled person realises that even though the activation signals should be issued simultaneously, the inherent operation of the tensioning mechanism of the web 11 and the inflation of the airbag 13 will typically have different reaction times, whereby it may take slightly longer time to reach a full inflation and hence deployment of the airbag 13 than to tension the web 11. This means that the tensioned web 11 will substantially form an instant reaction surface 5 that will support the airbag 13.

Fig. 1C discloses the anti-submarining system 10 in its activated condition, that is when the web 11 is in its tensioned condition and the airbag 13 is in its inflated condition. In its tensioned condition, the web 11 extends linearly between the two opposing structural seat components 21. When in the tensioned condition, all, or substantially all slack of the web 11 has been removed by the web tensioner 12, see Figs 1B and 1C. The thus tensioned web 11 will constitute a reaction surface 5 inside the seat 20 which in turn provides a stiffening of the seat 20. Said stiffening limits a passenger's body displacement during a collision event, as will be described later. Further to provide a stiffening of the seat 20, the reaction surface 5 provides a support for the airbag 13 from below, in so limiting any downward displacement of the airbag 13. Hence, the airbag 13 and the at least one web 11, although provided separate, should be considered as two cooperative elements of the anti-submarining system 10.

The support provided to the airbag 13 by the reaction surface 5 allows the airbag 13 to be arranged to extend across central and rear portions of the seat pan which in prior art vehicle seats typically lack structural support members. In other words and as shown in Fig. 1A, as a result of the support from the reaction surface 5, the airbag 13 is allowed to extend across central and/or rear portions of a seat pan 40, which commonly in prior art seats, due to comfort reasons, only comprise resilient members such as seat cushioning and spring structures which by themselves are insufficient for providing adequate support for the function of the airbag 13 as will be described later.

Now turning to Fig. 2A, an embodiment is disclosed highly schematically where the web 11 is fixedly connected to each of two opposing structural seat components 21 of a vehicle seat 20 by two of its ends 111, 112. While the seat 20 is shown without the airbag or common elements such as spring structure, cushioning or exterior upholstery to improve clarity, it is to be understood that the web 11 is configured to be arranged between the upholstery and the spring structure of the seat 20, as well as below and vertically overlapping the airbag, analogous to the embodiment described in Figs. 1A-C.

The structural components 21 may be two seat pan side structures of a seat pan of the vehicle seat. Alternatively, the two opposing structural seat components 21 may be two opposing seat pan cross members extending between two opposing seat pan side structures. No matter if the two opposing structural seat components 21 are two seat pan side structures or two opposing seat pan cross members extending between two opposing seat pan side structures, they may be appreciated to be substantially parallel with one another.

One of two ends 112 of the web 11 is configured to be connected to its corresponding structural component 21 via a web tensioner 12. The web tensioner 12 is configured to set the at least one web 11 from a slacked condition to a tensioned condition in response to a tensioner activation signal, such that a tensioned web 11a is achieved.

The tensioner activation signal is issued, simultaneously or near simultaneously, together with the issuing of an airbag activation signal. The airbag is inflated in response to the airbag activation signal. The respective signals may be generated upon a detection of an emergency situation, such as a crash situation.

In its tensioned condition the web 11a extends linearly between the two opposing structural seat components 21. When in the tensioned condition, all, or substantially all slack of the web 11a has been removed by the web tensioner 12. The thus tensioned web 11a will constitute a stiff reaction surface 5 to the airbag inside the seat 20. Said achieved stiffening limits a passenger's body displacement during a collision event, as will be described later.

In some embodiments, at least two webs 11 may be provided. The at least two webs may be coupled to a common web tensioner. Alternatively, each of the at least two webs may be provided with its own web tensioner.

Next, Fig. 2B discloses, highly schematically, an embodiment where one of the ends 112 of the web 11 is configured to be fixedly connected to one of the two opposing structural seat components 21 of the seat 20 and to slidably and partially encircle the second of the two opposing structural seat components 21 of the seat 20. The meaning of slidingly and partially encircle aims in this regard to describe that the web 11 is not wrapped around, i.e., does not complete a full lap around the structural seat component 21, and that the web is configured to enable its sliding relative to the structural seat component 21.

While the seat 20 is shown without the airbag or common elements such as spring structure, cushioning or exterior upholstery to improve clarity, it is to be understood that the web 11 is configured to be arranged between the upholstery and the spring structure of the seat 20, as well as below and in a vertically overlapping relation with the airbag, analogous to the embodiment described in Figs. 1A-C.

The structural components 21 may be two seat pan side structures of a seat pan of the vehicle seat. Alternatively, the two opposing structural seat components 21 may be two opposing seat pan cross members extending between two opposing seat pan side structures. No matter if the two opposing structural seat components 21 are two seat pan side structures or two opposing seat pan cross members extending between two opposing seat pan side structures, they may be appreciated to be substantially parallel with one another.

The second opposing end 111 of the web 11 is configured to be fixedly connected a suitable anchor point 3 via a web tensioner 12. The anchor point 3 allows the web 11 to achieve a tensioned state between its fixed connection to the first structural seat component 21 and the anchor point 3 while it partly and slidably encircles the second of the two opposing structural seat components 21. The skilled person realizes that the suitable anchor point 3 may be any structural component of a vehicle, for example a structural floor component or a pillar of a vehicle body. Alternatively, the anchor point 3 may be a structural seat component 21.

The web tensioner 12 is configured to set the at least one web 11 from a slacked condition to a tensioned condition in response to a tensioner activation signal, such that a tensioned web 11a is achieved.

The tensioner activation signal is issued, simultaneously or near simultaneously, together with the issuing of an airbag activation signal. The airbag is inflated in response to the airbag activation signal. The respective signals may be generated upon a detection of an emergency situation, such as a crash situation.

In its tensioned condition the web 11a extends linearly between the two opposing structural seat components 21. When in the tensioned condition, all, or substantially all slack of the web 11 has been removed by the web tensioner 12. The thus tensioned web 11a will constitute a reaction surface 5 inside the seat 20 which in turn provides a stiffening of the seat 20 and hence forms a reaction surface to the airbag. Said achieved stiffening limits a passenger's body displacement during a collision event, as will be described later.

In some embodiments, at least two webs 11 may be provided. The at least two webs 11 may be coupled to a common web tensioner. Alternatively, each of the at least two webs may be provided with its own web tensioner.

Further to providing a stiffening to the seat 20, the reaction surface 5 provides support to the inflated airbag (not shown) as disclosed in Fig. 1C.

Now turning to Fig 2C, an embodiments is shown, highly schematically, where the at least one web 11 partially and slidably encircles both of the two opposing structural seat components 21.

The at least one web 11 partially and slidably encircles two opposing structural seat components 21 of a vehicle seat 20. The meaning of slidingly and partially encircle aims in this regard in describing that the web 11 is not wrapped around, i.e., does not complete a full lap around the structural seat component 21, and that the web is configured to enable its sliding relative to the structural seat component 21.

The structural components 21 may be two seat pan side structures of a seat pan of the vehicle seat. Alternatively, the two opposing structural seat components 21 may be two opposing seat pan cross members extending between two opposing seat pan side structures. No matter if the two opposing structural seat components 21 are two seat pan side structures or two opposing seat pan cross members extending between two opposing seat pan side structures, they may be appreciated to be substantially parallel with one another.

While the seat 20 is shown without the airbag or common elements such as spring structure, cushioning or exterior upholstery to improve clarity, it is to be understood that the web 11 is configured to be arranged between the upholstery and the spring structure of the seat 20, as well as below and vertically overlapping the airbag, analogous to the embodiment described in Figs. 1A-C.

Two opposing ends 111, 112 of the web 11 are fixedly connected to suitable anchor points 3. One of the two ends 111 is connected to its corresponding anchor point 3 via the web tensioner 12. The anchor points 3 allow the web 11 to achieve a tensioned state between the two anchor points 3 while partially and slidably encircle the two opposing structural seat components 21. The skilled person realizes that the suitable anchor points 3 may be any structural components of a vehicle, for example structural floor components or pillars of a vehicle body. Alternatively, the anchor points 3 may be the structural seat components 21.

The web tensioner 12 is configured to set the at least one web 11 from a slacked condition to a tensioned condition in response to a tensioner activation signal, such that a tensioned web 11a is achieved.

The tensioner activation signal is issued, simultaneously or near simultaneously, together with the issuing of an airbag activation signal. The airbag is inflated in response to the airbag activation signal. The respective signals may be generated upon a detection of an emergency situation, such as a crash situation.

In its tensioned condition the web 11a extends linearly between the two opposing structural seat components 21. When in the tensioned condition, all, or substantially all slack of the web 11a has been removed by the web tensioner 12. The thus tensioned web 11a will constitute a reaction surface 5 to the airbag inside the seat 20.

In some embodiments, least two webs 11 are provided. The at least two webs may be coupled to a common web tensioner. Alternatively, each of the at least two webs may be provided with its own web tensioner.

Next, Fig 2D discloses an embodiment wherein the at least one web 11 partially and slidably encircles two opposing structural seat components 21 of a vehicle seat 20. The meaning of slidingly and partially encircle aims in this regard in describing that the web 11 is not wrapped around, i.e., does not complete a full lap around the structural seat component 21, and that the web is configured to enable its sliding relative to the structural seat component 21.

The structural components 21 may be two seat pan side structures of a seat pan of the vehicle seat. Alternatively, the two opposing structural seat components 21 may be two opposing seat pan cross members extending between two opposing seat pan side structures. No matter if the two opposing structural seat components 21 are two seat pan side structures or two opposing seat pan cross members extending between two opposing seat pan side structures, they may be appreciated to be substantially parallel with one another.

While the seat 20 is shown without the airbag or common elements such as spring structure, cushioning or exterior upholstery to improve clarity, it is to be understood that the web 11 is configured to be arranged between the upholstery and the spring structure of the seat 20, as well as below and vertically overlapping the airbag, analogous to the embodiment described in Figs. 1A-C.

Two opposing ends 111, 112 of the web 11 connect to one another via the web tensioner 12 as the web 11 loops around the two structural seat components 21 of the seat 20. The web tensioner 12 is configured to set the at least one web 11 from a slacked condition to a tensioned condition in response to a tensioner activation signal, such that a tensioned web 11a is achieved.

The tensioner activation signal is issued, simultaneously or near simultaneously, together with the issuing of an airbag activation signal. The airbag is inflated in response to the airbag activation signal. The respective signals may be generated upon a detection of an emergency situation, such as a crash situation.

In its tensioned condition the web 11a extends linearly between the two opposing structural seat components 21. When in the tensioned condition, all, or substantially all slack of the web 11a has been removed by the web tensioner 12. The thus tensioned web 11a will constitute a reaction surface 5 inside the seat 20 which in turn provides a stiffening of the seat 20 and hence a reaction surface to the airbag.

In some embodiments, at least two webs 11 may be used. The at least two webs may be coupled to a common web tensioner. Alternatively, each of the at least two webs may be provided with its own web tensioner.

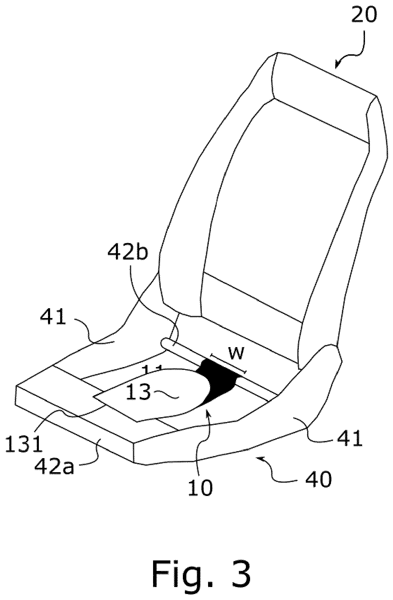

Now turning to Fig. 3 an embodiment of the anti-submarining system 10 is disclosed, highly schematically. The web 11 extends between two seat pan cross members 42a, 42b which in turn extend between the two seat pan side structures 41 of a vehicle seat 20.

While the seat 20 is shown without common elements such as spring structure, cushioning or exterior upholstery to improve clarity, it is to be understood that the web 11 is configured to be arranged between the upholstery and the spring structure of the seat 20, as well as below and vertically overlapping the airbag 13, analogous to the embodiment described in Figs. 1A-C.

The airbag 13 is provided separate from and above the web 11 such that the airbag 13 and the web 11 vertically overlap. The airbag 13 is attached, at one of its ends 131, to the front seat pan cross member 42a and extends towards the rear seat pan cross member 42b. The airbag 13 is further positioned in an area of the seat pan 40 such that the airbag 13 is below and vertically overlaps the femurs of a seated passenger (not show). In the present embodiment, the airbag 13 has an extension such that a majority of the airbag 13 is unsupported from below by any of the structural seat components 40, 41, 42a, 42b.

In embodiments wherein the two structural seat components are two seat pan cross members 42a, 42b, the at least one web 11 may be a single web with a width W of at least 5 cm, preferably within a range of 10-50 cm. Alternatively, it may be two or more webs 11 with a combined width W of at least 5 cm, preferably within a range of 10-50 cm. The at least one web 11 is disclosed as being arranged in an area of the seat pan 40 substantially in line with and below the femurs of a seated person (not shown). This arrangement of the at least one web 11 ensures that the reaction surface 5 provided upon the tensioning of the at least one web 11 is formed in an area below the ischium bones of a seated passenger (not shown). Thereby an effective stiffening of the seat pan 40 is achieved where the reaction surface 5 that is formed by the activation of the anti-submarining system 10 supports the inflated airbag 13 from below as is disclosed in Fig. 1C. By the non-stretchable properties of the web 11, a substantially stiff reaction surface 5 is provided. Said achieved stiffening limits a passenger's body displacement during a collision event i.e., the reaction surface limits sinking down of the body in a direction towards the seat pan 40, as will be described later.

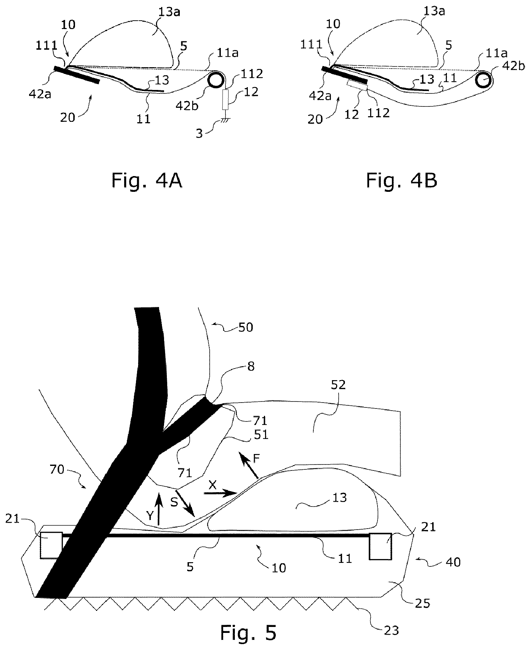

Next, Fig. 4A and 4B disclose two, highly schematic, examples where the web 11 extends between two seat pan cross members 42a, 42b of a vehicle seat 20. While these examples show the seat 20 without common elements such as spring structure, cushioning or exterior upholstery to improve clarity, it is to be understood that the web 11 is configured to be arranged between the upholstery and the spring structure of the seat 20, as well as below and vertically overlapping the airbag, analogous to the embodiment described in Figs. 1A-C.

The airbag 13, illustrated in its inflated condition, is provided separate from and above the web 11 such that the airbag 13 and the web 11 vertically overlap. The airbag 13 is attached, at one of its ends, to the front seat pan cross member 42a and extends towards the rear seat pan cross member 42b. The airbag 13 is further positioned in an area of the seat pan 40 such that the airbag 13 is below and vertically overlaps the femurs of a seated passenger (not shown). In the present embodiments, the airbag has an extension such that a majority of the airbag is unsupported from below by any of the structural seat components 42a, 42b.

In Fig 4A, the at least one web 11 is disclosed as being fixedly connected to the front seat pan cross member 42a via its first end 111, and to slidably and partially encircle the rear seat pan cross member 42b via its second end 112. The meaning of slidingly and partially encircle aims in this regard in describing that the web 11 is not wrapped around, i.e., does not complete a full lap around the structural rear seat pan cross member 42b, and that the web is configured to enable its sliding relative to the rear seat pan cross member 42b. The second end 112 of the at least one web 11 is fixedly connected to a suitable anchor point 3 via the web tensioner 12. The anchor point 3 allows the web 11 to achieve a tensioned state between its fixed connection to the front seat pan cross member 42a and the anchor point 3 while it partly and slidably encircles the rear seat pan cross member 42b. The skilled person realizes that the suitable anchor point 3 may be any structural component of a vehicle, for example a structural floor component or a pillar of a vehicle body. Alternatively, the anchor point 3 may be a structural seat component.

The web tensioner 12 is configured to set the at least one web 11 from a slacked condition to a tensioned condition in response to a tensioner activation signal, such that a tensioned web 11a is achieved. The tensioner activation signal is issued, simultaneously or near simultaneously, together with the issuing of an airbag activation signal. The airbag 13a is inflated in response to the airbag activation signal. The respective signals may be generated upon a detection of an emergency situation, such as a crash situation.

In its tensioned condition the web 11a extends linearly between the front 42a and rear 42b seat pan cross members. When in the tensioned condition, all, or substantially all slack of the web 11 has been removed by the web tensioner 12. The thus tensioned web 11a will constitute a reaction surface 5 inside the seat 20 which in turn provides a stiffening of the seat 20 by forming a stiff support surface for the inflated airbag 13a. Said achieved stiffening limits a passenger's body displacement during a collision event, as will be described later.

The second embodiment, shown in Fig. 4B, discloses, highly schematically, that the at least one web 11 is fixedly connected to the front seat pan cross member 42a by a first end 111 of its two opposing ends 111, 112. The web slidably and partially encircles the rear seat pan cross member 42b and then connects to the front seat pan cross member 42a again at the second end 112 of the two opposing ends 111, 112 via the tensioning device 12. The meaning of slidingly and partially encircle aims in this regard in describing that the web 11 is not wrapped around, i.e., does not complete a full lap around the structural rear seat pan cross member 42b, and that the web is configured to enable its sliding relative to the rear seat pan cross member 42b.

The tensioning device is disclosed as being arranged on a lower surface of the front seat pan cross member 42a. The web tensioner 12 is configured to set the at least one web 11 from a slacked condition to a tensioned condition in response to a tensioner activation signal, such that a tensioned web 11a is achieved. The tensioner activation signal is issued, simultaneously or near simultaneously, together with the issuing of an airbag activation signal. The airbag 13 is inflated in response to the airbag activation signal. The respective signals may be generated upon a detection of an emergency situation, such as a crash situation.

In its tensioned condition the web 11a extends linearly between the front 42a and rear 42b seat pan cross members. When in the tensioned condition, all, or substantially all slack of the web 11 has been removed by the web tensioner 12. The thus tensioned web 11a will constitute a reaction surface 5 inside the seat 20 which in turn provides a stiffening of the seat 20 and forms a support surface for the inflated airbag 13a. Said achieved stiffening limits a passenger's body displacement during a collision event, as will be described later.

Next, in Fig. 5, the overall function of the anti-submarining system according the presented embodiments will be disclosed. The primary purpose of the anti-submarining system 10 is to at least limit the displacement of a seated passenger's body 50 in the event of a collision. Specifically said limiting of said displacement includes limiting both a displacement S into the seat 20, i.e., submarining, as well as a forward displacement X of a passenger's body 50. The airbag 13 and the at least one web 11, although provided separate, should in this context be considered as two cooperative elements of the anti-submarining system 10.

The activation of the anti-submarining system 10 results in a tensioning of the at least one web 11 and a simultaneous or near simultaneous inflation of the airbag 13. Hence, the tensioner activation signal and the airbag activation signal may be issued simultaneously or, the one may be delayed with respect to the other. The skilled person realises that even though the activation signals should be issued simultaneously, the inherent operation of the tensioning mechanism of the web 11 and the inflation of the airbag 13 will have different reaction times, whereby it may take slightly longer time to reach a full inflation and hence deployment of the airbag 13 than tensioning the web 11. This means that the tensioned web 11 will substantially form an instant reaction surface 5 for the airbag inside the seat 20.

During the inflation of the airbag 13, an upward displacement F of the femur 52 of a seated person is achieved. The inflated airbag acts as an obstacle that absorbs forward directed collision forces, thereby limiting a forward displacement X of a seated person 50. The airbag 13 can be said to work in tandem with the seatbelt 70 for absorbing forward directed forces. Thereby any forward displacement X of the pelvis 51 of a seated passenger is limited.

Meanwhile, in a cooperative fashion, the at least one tensioned web 11 will constitute a reaction surface 5 inside the seat 20 which thereby provides vertical support for both the passenger 50 and the airbag 13. Hence, the reaction surface 5 formed by the at least one tensioned web 11 has at least two main functions.

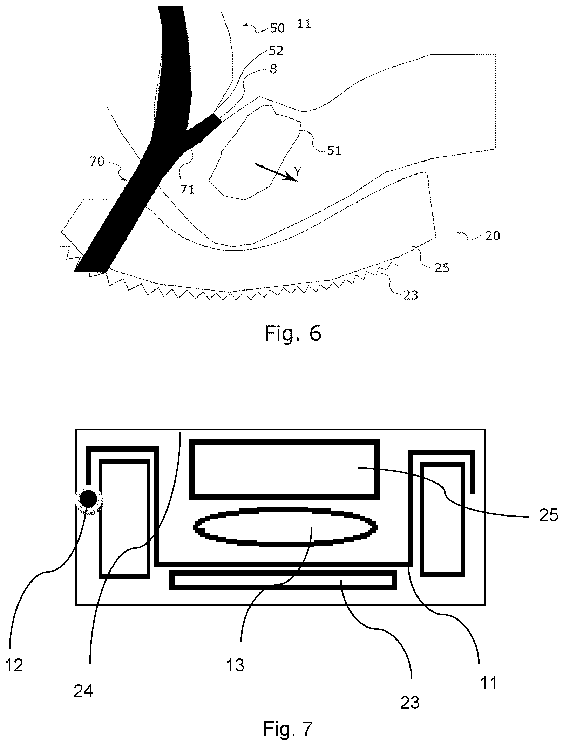

As for the first function of the reaction surface, the resilience in the seat 20 provided by the cushioning 25 and the spring structure 23 is effectively reduced by the formation of the reaction surface 5. The resulting stiffening of the seat 20 limits or reduces a passenger's body displacement S into the seat 20 during a collision event, thereby reducing the risk of an unfavourable body position relative to the seat belt 70 i.e., submarining. The meaning of an unfavourable position in the context of the invention pertains to a positioning of the pelvic bone 51 of the passenger where the reaction surface provided by the lower strap 71 of the seat belt does not engage the area of the pelvic bones 51. An unfavourable position of a passenger's body 50 is schematically shown in Fig. 6 where the lack of support from the spring structure 23 and the cushioning 25 has allowed the passenger 50 to sink down into the seat 20, i.e., submarining.

Returning to Fig. 5, the web 11 extends linearly between the two opposing structural seat components 21, in the present example the front and rear cross members, when in its tensioned condition. Further to limit a passenger's body displacement during a collision event, the reaction surface 5 provided by the tensioned web 11 may promote a vertical displacement Y of the passenger's body such that a more favourable position is achieved.

As for the second function of the reaction surface 5, the reaction surface 5 formed by the at least one tensioned web 11 provides a support for the airbag 13 from below, in so limiting or reducing any downward displacement of the air bag and any pelvic rotation. The thus formed reaction surface 5 to the airbag 13 allows the airbag 13 to be arranged to extend across central and rear portions of the seat pan which in most vehicle seats on the market typically lack structural support members 21. In other words, by the support provided by the reaction surface 5, the airbag is allowed to extend across central and/or rear portions of a seat pan 40 which commonly in prior art seats, due to comfort reasons, only comprise resilient members such as seat cushioning 25 and spring structures 23 which by themselves are insufficient for providing adequate support for the function of the airbag 13 as disclosed above.

Hence, the cooperative functioning of the at least one web 11 and the airbag 13 allow the airbag 13 to be placed centrally in a seat pan 40 or closer to the rear portion of the seat pan. Thereby, the airbag 13 may be arranged closer to the pelvis 51 of a seated passenger 50 than what would have been possible without the support from the reaction surface 5 of the web 11. This improves the airbags 13 ability to limit any forward displacement X of the pelvis 51 of a seated passenger 50. Also, the inventive anti-submarining system does not interfere with the comfort of the vehicle seat in its intended normal use.

Fig. 7 discloses, highly schematically, an alternative position of the airbag 13 and the web 11. The embodiment differs from the embodiments discussed above in the position of the airbag 13. The airbag 13 is arranged in a position between the web 11 and the seat cushioning 25. The web 11 is in turn arranged above the spring structure 23. Further, the web 11 is connected to a web tensioner 12. All aspects and functionality discussed above in view of the other embodiments are equally applicable to the embodiment of Fig. 7. The different positions of the web tensioner 12 discussed above are directly applicable to this embodiment.

It is realized by a person skilled in the art that features from various embodiments disclosed herein may be combined with one another to provide further alternative embodiments.

## Claims

1. An anti-submarining system (10) to be used in a vehicle seat (20), comprising:
an inflatable airbag (13), at least one web (11), and a web tensioner (12) coupled to the at least one web (11), wherein
the at least one web (11) is configured to be arranged to extend between two opposing structural seat components (21);
the at least one web (11) is configured to be arranged inside the seat (20) in a position between a spring structure (23) and an exterior upholstery (24) of the vehicle seat (20);
the inflatable airbag (13) is provided separate from and above the web (11) such that the airbag (13) and the web (11) vertically overlap, and is configured to be arranged in a position between the web (11) and the exterior upholstery (24),
the inflatable airbag (13) is connected to an inflator which is configured to inflate the airbag (13) in response to an airbag activation signal; and
the web tensioner (11) is configured to set the at least one web (11) from a slacked condition to a tensioned condition in response to a tensioner activation signal, whereby the thus tensioned web (11) forms a reaction surface (5) configured to support the inflated airbag (13) from below in a direction upwardly towards a seated passenger.

2. The anti-submarining system (10) according to claim 1, wherein the at least one web (11) and the airbag (13) at least partially overlap each other and, wherein the airbag (13) and the at least one web (11) are free to move relative to one another.

3. The anti-submarining system (10) according to claim 1 or 2, wherein the at least one web (11) is configured to be fixedly connected to each of the two opposing structural seat components (21); or
wherein the at least one web (11) is configured to be fixedly connected to one of the two opposing structural seat components (21) and to partially and slidably encircle the second of the two opposing structural seat components (21); or
wherein the at least one web (11) is configured to partially and slidably encircle both of the two opposing structural seat components (21).

4. The anti-submarining system (10) according to any of the preceding claims, wherein the two opposing structural seat components (21) are two opposing seat pan side structures (41) of a seat pan (40) of the vehicle seat (20); or
wherein the two opposing structural seat components (21) are two cross members (42) extending between the two seat pan side structures (41).

5. The anti-submarining system (10) according to any of the preceding claims, wherein the airbag (13) in one end is configured to be attached to a front seat pan cross member (42a) and to extend towards a rear seat pan cross member (42b), and
wherein the airbag (13) is configured to be position in an area of the seat pan (40) configured to be below and vertically overlap the femurs of a seated passenger.

6. The anti-submarining system (10) according to any of the preceding claims, wherein the two opposing structural seat components (21) are two seat pan cross members (42), and
wherein the at least one web (11) is configured to be arranged substantially in line with and below the femurs of a seated person (50).

7. The anti-submarining system (10) according to claim 6, wherein
the at least one web (11) is configured to be fixedly connected to a front seat pan cross member (42a), and to slidably and partially encircle a rear seat pan cross member (42b); or
wherein the at least one web (11) is configured to be fixedly connected to a rear seat pan cross member (42b), and to slidably and partially encircle a front seat pan cross member (42a).

8. The anti-submarining system (10) according to any of the preceding claims, wherein the at least one web (11) is one web (11) with a width of at least 5 cm, preferably within a range of 10-50 cm; or
wherein two or more webs (11) are provided with a combined width of at least 5 cm, preferably within a range of 10-50 cm.

9. The anti-submarining system (10) according to any of the claims 6-8, wherein the tensioning device (12) is configured to be fixedly connected to the front seat pan cross member (42a) or to the rear seat pan cross member (42b).

10. The anti-submarining system (10) according to claims 1-5, wherein the two opposing structural seat components (21) are two seat pan side structures (41), and
wherein the at least one web (11) is configured to extend along a portion of the seat pan below the airbag (13) such that the reaction surface (5) formed upon tensioning of the at least one web supports the inflated airbag (13) from below in a direction towards a seated passenger.

11. The anti-submarining system (10) according any of the preceding claims, wherein the at least one web (11) is comprised of a non-stretchable pliable material.

12. The anti-submarining system (10) according to any of the preceding claims, wherein the anti-submarining system (10) comprises at least two webs (11), and wherein the at least two webs (11) are coupled to a common web tensioner (12).

13. The anti-submarining system (10) according to any of the preceding claims, wherein the web tensioner (12) is a linear tensioner or a rotary tensioner.

14. Use of the anti-submarining system (10) according to any of claims 1-13 in a vehicle seat (20).

## Amended claims

### Amended claims in accordance with Rule 137(2) EPC.

1. An anti-submarining system (10) to be used in a vehicle seat (20), comprising:
an inflatable airbag (13), at least one web (11), and a web tensioner (12) coupled to the at least one web (11), wherein
the at least one web (11) is configured to be arranged to extend between two opposing structural seat components (21);
the at least one web (11) is configured to be arranged inside the seat (20) in a position between a spring structure (23) and an exterior upholstery (24) of the vehicle seat (20);
the inflatable airbag (13) is configured to be arranged in a position between the web (11) and the exterior upholstery (24) and separate from and above the web (11) such that the airbag (13) and the web (11) at least partly vertically overlap each other, and the airbag (13) and the at least one web (11) are free to move relative to one another, ,
the inflatable airbag (13) is connected to an inflator which is configured to inflate the airbag (13) in response to an airbag activation signal; and
the web tensioner (11) is configured to set the at least one web (11) from a slacked condition to a tensioned condition in response to a tensioner activation signal, whereby the thus tensioned web (11) forms a reaction surface (5) configured to support the inflated airbag (13) from below in a direction upwardly towards a seated passenger.

2. The anti-submarining system (10) according to claim 1, wherein the at least one web (11) is configured to be fixedly connected to each of the two opposing structural seat components (21); or
wherein the at least one web (11) is configured to be fixedly connected to one of the two opposing structural seat components (21) and to partially and slidably encircle the second of the two opposing structural seat components (21); or
wherein the at least one web (11) is configured to partially and slidably encircle both of the two opposing structural seat components (21).

3. The anti-submarining system (10) according to any of the preceding claims, wherein the two opposing structural seat components (21) are two opposing seat pan side structures (41) of a seat pan (40) of the vehicle seat (20); or
wherein the two opposing structural seat components (21) are two cross members (42) extending between the two seat pan side structures (41).

4. The anti-submarining system (10) according to any of the preceding claims, wherein the airbag (13) in one end is configured to be attached to a front seat pan cross member (42a) and to extend towards a rear seat pan cross member (42b), and
wherein the airbag (13) is configured to be position in an area of the seat pan (40) configured to be below and vertically overlap the femurs of a seated passenger.

5. The anti-submarining system (10) according to any of the preceding claims, wherein the two opposing structural seat components (21) are two seat pan cross members (42), and
wherein the at least one web (11) is configured to be arranged substantially in line with and below the femurs of a seated person (50).

6. The anti-submarining system (10) according to claim 5, wherein
the at least one web (11) is configured to be fixedly connected to a front seat pan cross member (42a), and to slidably and partially encircle a rear seat pan cross member (42b); or
wherein the at least one web (11) is configured to be fixedly connected to a rear seat pan cross member (42b), and to slidably and partially encircle a front seat pan cross member (42a).

7. The anti-submarining system (10) according to any of the preceding claims, wherein the at least one web (11) is one web (11) with a width of at least 5 cm, preferably within a range of 10-50 cm; or
wherein two or more webs (11) are provided with a combined width of at least 5 cm, preferably within a range of 10-50 cm.

8. The anti-submarining system (10) according to any of the claims 5-7, wherein the tensioning device (12) is configured to be fixedly connected to the front seat pan cross member (42a) or to the rear seat pan cross member (42b).

9. The anti-submarining system (10) according to claims 1-4, wherein the two opposing structural seat components (21) are two seat pan side structures (41), and
wherein the at least one web (11) is configured to extend along a portion of the seat pan below the airbag (13) such that the reaction surface (5) formed upon tensioning of the at least one web supports the inflated airbag (13) from below in a direction towards a seated passenger.

10. The anti-submarining system (10) according any of the preceding claims, wherein the at least one web (11) is comprised of a non-stretchable pliable material.

11. The anti-submarining system (10) according to any of the preceding claims, wherein the anti-submarining system (10) comprises at least two webs (11), and wherein the at least two webs (11) are coupled to a common web tensioner (12).

12. The anti-submarining system (10) according to any of the preceding claims, wherein the web tensioner (12) is a linear tensioner or a rotary tensioner.

13. Use of the anti-submarining system (10) according to any of claims 1-12 in a vehicle seat (20).
